# FASCICULE DE BREVET EUROPEEN

(11) **EP 0 441 666 B1**
(45) Date de publication et mention de la délivrance du brevet: **20.03.1996**
(21) Numéro de dépôt: 91400031.0
(22) Date de dépôt: 09.01.1991
(51) Int. Cl.: C08L 29/04

(54) **Film barrière constitué d'un alliage à base d'un copolymère éthylène-alcool vinylique, sa préparation, son utilisation notamment dans l'emballage**
Äthylen-Vinylalkohol-Copolymer-Gassperrfilm, seine Herstellung und seine Anwendung für Verpackungszwecke
Barrier film containing an ethylene vinyl alcohol copolymer, its preparation and its use for packaging

(30) Priorité: 15.01.1990 FR 9000384
(43) Date de publication de la demande: 14.08.1991
(73) Titulaire: ELF ATOCHEM S.A., F-92800 Puteaux (FR)
(72) Inventeur: Audry, Richard, F-27170 Beaumont Le Roger (DE); Nogues, Pierre, F-27300 Bernay (FR)

(56) Documents cités:
- EP-A- 0 015 556
- EP-A- 0 342 066
- US-A- 3 975 463

## Description

La présente invention concerne le domaine des films et plus particulièrement celui des films dits "barrières" résistant à l'eau chaude et à la vapeur d'eau surchauffée destinés à l'emballage de produits alimentaires.

Afin d'assurer une conservation des produits alimentaires, il est nécessaire d'assurer non seulement une protection contre les poussières mais également contre l'humidité, contre certains gaz tels que l'oxygène et le gaz carbonique et contre les odeurs.

A cette fin on utilise des résines polymériques dénommées résines barrières qui possèdent des propriétés de perméabilité aux gaz et à la vapeur d'eau c'est-à-dire qui sont plus ou moins perméables aux gaz et à la vapeur d'eau.

D'une façon générale les films sont composés de une à plusieurs couches constituées par des polymères imperméables aux gaz et des polymères imperméables à la vapeur d'eau.

Ainsi, lorsque la perméabilité à l'oxygène doit être faible on a recours à des polymères dont les propriétés barrière à ce gaz sont très performantes tels que par exemple les copolymères éthylène - alcool vinylique (EVOH) qui sont reconnus comme d'excellents matériaux à cet égard.

Si l'on veut obtenir une protection suffisante à la vapeur d'eau on emploie une couche barrière constituée par des polyoléfines telles que le polypropylène.

Les exigences en imperméabilité aux gaz et à la vapeur d'eau variant d'une forme de conditionnement à l'autre, d'un produit alimentaire à l'autre on utilisera des films qui pourront être constitués de une à plusieurs couches de polymère ayant des propriétés de perméabilité aux gaz et à la vapeur d'eau différentes.

Afin d'améliorer la qualité des produits alimentaires "frais" et d'augmenter leur durée de conservation il est nécessaire de conditionner les produits alimentaires de façon aseptique.

A cette fin de nombreux procédés existent. On peut citer par exemple la pasteurisation et la stérilisation.

Dans ces procédés l'emballage - ou le produit alimentaire emballé - est soumis à l'action de l'eau chaude (85°C - 100°C) ou à l'action de la vapeur d'eau surchauffée pendant des temps allant de quelques secondes à plusieurs heures. Dans le cas par exemple de la stérilisation la température atteint 121°C voire 135°C - 140°C. Il est alors nécessaire que l'emballage constitué par un film ayant une ou plusieurs couches "barrières" résiste mécaniquement à l'action combinée de l'eau et de la température ainsi qu'également aux pressions qui peuvent atteindre 3 à 4 bars.

On constate que certains films à base notamment d'EVOH subissent au moment de la stérilisation ou sous l'action de l'eau chaude des dégradations qui se manifestent par un fripage de la couche atteinte voire un délaminage total du film multicouche.

On a maintenant trouvé un film ayant une résistance améliorée à l'eau chaude et à la vapeur d'eau surchauffée caractérisé en ce qu'il est constitué totalement ou partiellement d'un alliage comprenant au moins une matrice d'un copolymère d'éthylène-alcool vinylique, au moins un polypropylène et au moins un agent compatibilisant, le dit alliage comprenant au moins 30% en poids d'EVOH.

Le film selon l'invention est caractérisé en ce que l'alliage comprend au moins 30 % en poids d'EVOH. Parmi ces films on donnera la préférence à ceux issus d'alliages comprenant :
- 42,5 % à 99,5 % en poids d'EVOH
- 42,5 % à 0,2 % en poids de polypropylène
- 0,1 % à 15 % en poids d'agent compatibilisant.

La composition en EVOH de l'alliage se caractérise par le fait que la matrice ou phase dispersante est l'EVOH. Le polypropylène est dispersé sous forme de nodules plus ou moins sphériques ou de bâtonnets cylindriques.

L'adhésion entre les phases est assurée de préférence par un copolymère greffé à base d'α-monooléfine appelé agent compatibilisant qui est décrit dans la demande de brevet européen publiée le 15.09.1989 sous le N° 0 342 066.

Parmi les agents compatibilisants cités dans la demande de brevet européen ci-dessus citée en référence, on donnera la préférence aux agents compatibilisants de formule AMXP :
- AM représente un copolymère tronc obtenu par copolymérisation de propylène et d'α-oléfines,
- X est choisi dans le groupe constitué par l'anhydride citraconique, l'acide fumarique, l'acide mésaconique, l'anhydride d'acide 3-allylsuccinique et l'anhydride maléique,
- P représente un oligomère de polyamide dérivé de caprolactame, d'acide amino-11 undécanoique ou de dodécalactame.

L'EVOH est un copolymère constitué essentiellement d'unités éthylène et alcool vinylique et peut contenir de faibles quantités d'autres unités monomères, en particulier d'unité ester de vinyle. Ces copolymères peuvent être obtenus par saponification ou alcoolyse partielle ou totale de copolymère éthylène - ester de vinyle. Parmi les esters de vinyle, l'acétate de vinyle est le monomère préféré. Le degré de saponification ou d'alcoolyse est au moins égal en moles à 90 % et de préférence est compris entre 94 et 99,5 %. La proportion en moles d'éthylène dans l'EVOH est comprise dans l'intervalle de 3 à 75 % et de préférence de 10 à 50 %.

Le polypropylène est un polymère constitué essentiellement d'unité propylène. Il peut contenir des quantités (au plus 40 % molaire) d'une autre unité monomère en particulier éthylène et/ou une ou plusieurs α-oléfines contenant 4 à 6 atomes de carbone. On utilise en particulier un homopolypropylène ou un copolymère séquencé du propylène avec 0,5 à 30 % molaire d'éthylène ou un copolymère statistique de propylène et d'éthylène contenant 0,1 à 30 % molaire d'éthylène.

Aux trois principaux constituants que sont l'EVOH, le polypropylène et l'agent compatibilisant, on peut éventuellement ajouter de faibles quantités d'autres composés du type stabilisant, agent antistatique, lubrifiant et d'autres composés polymériques.

Les constituants étant sous forme de poudre ou de granulés, la préparation de l'alliage peut être réalisée en solution où à l'état fondu au moyen d'une machine de transformation de type extrudeuse monovis ou bivis contra ou corotative ou d'un mélangeur à cylindre.

Les films monocouches selon l'invention sont constitués totalement en alliage.

Les films multicouches sont constituées par au moins une couche en alliage, l'autre ou les autres couches sont constituées de polymères choisis dans le groupe constitué notamment par le polyéthylène (PE), le polypropylène (PP), le polyamide (PA), le polyéthylènetéréphtalate (PET), le polycarbonate (PC).

Pour certains polymères, il est nécessaire d'utiliser un liant de coextrusion qui assure une meilleur adhésion entre les couches.

Dans les films multicouches selon l'invention, la couche en alliage peut être externe ou interne.

Comme exemples de films multicouches selon l'invention on peut citer les films :
- PP/alliage/PP
- PP/liant de coextrusion/alliage
- PP/liant de coextrusion/alliage/liant de coextrusion/PP
- PA/alliage.

Les films selon l'invention peuvent être obtenus par extrusion à plat ou par extrusion soufflage à des températures comprises entre 200°C et 260°C.

Outre les techniques de coextrusion en filière plate ou en filière annulaire, les films conformes à l'invention peuvent être mis en oeuvre selon des techniques telles que l'extrusion-couchage et le contrecollage-lamination, cette dernière technique permettant par exemple d'associer un film et une feuille de métal tel que l'aluminium.

Les films selon l'invention réalisés à partir de l'alliage présentent une résistance améliorée à l'eau chaude et à la vapeur d'eau surchauffée.

Ainsi, les films monocouches ou multicouches soumis à la vapeur d'eau surchauffée à des températures comprises entre 100°C et 140°C, sous des pressions allant de 1 à 4 bars gardent leur transparence et présentent un aspect de surface pratiquement intact, alors que les mêmes films constitués totalement ou partiellement d'EVOH deviennent opaques et sont striés, déformés ou délaminés.

Les films selon l'invention constitués totalement ou partiellement de l'alliage peuvent entrer dans l'élaboration de divers emballages et tous particulièrement ils peuvent être utilisés pour confectionner des sachets, des enveloppes souples, des barquettes, des pots,... pour le conditionnement des produits alimentaires.

Les films conformes à l'invention peuvent également être utilisés pour la confection de membranes utilisées dans le domaine médical, dans les techniques telles que l'hémodialyse ou la plasmaphorése.

Les exemples suivants illustrent l'invention.

### - Essais 1 à 5

a/ Cinq compositions sont réalisées à l'aide d'une extrudeuse double vis corotative avec les proportions des constituants :
- EVOH : copolymère éthylène-acétate de vinyle hydrolysé à 99,3 % contenant 32 % en mole d'éthylène d'indice de fusion (Melt Index : MI) 3,2 g/10 minutes mesuré à 210°C sous 2,16 kg,
- PP : copolymère statistique éthylène-propylène à 3 % en poids d'éthylène de MI 2 g/10 minutes mesuré à 230°C sous 2,16 kg,
- agent compatibilisant : copolymère greffé comme indiqué dans le Tableau I, préparé selon l'exemple 1 de la demande de brevet européen N° 0 342 066.

Dans ce tableau :
A est un motif dérivé du propylène
M est un motif dérivé de l'éthylène
X est un motif dérivé de l'anhydride maléique
P est un oligomère de caprolactame de masse moléculaire de 2700 déterminée par dosage potentiométrique des fonctions amines terminales.

b/ Ces compositions sont ensuite extrudées sous forme de film de 20 µm d'épaisseur au moyen d'une extrudeuse monovis à une température allant de 210°C à 230°C.

Ces films sont observés par microscopie électronique à balayage (MEB) après fracture cryogénique. (Voir Tableau I)

Du fait de l'orientation due à l'extrusion du film, la phase dispersée se présente sous forme de bâtonnets orientés dans le sens de l'extrusion: la taille des bâtonnets est mesurée sur les fractures après dissolution dans du xylène de la phase dispersée.

L'évaluation de l'adhésion entre phases est faite sur les fractures de façon qualitative.

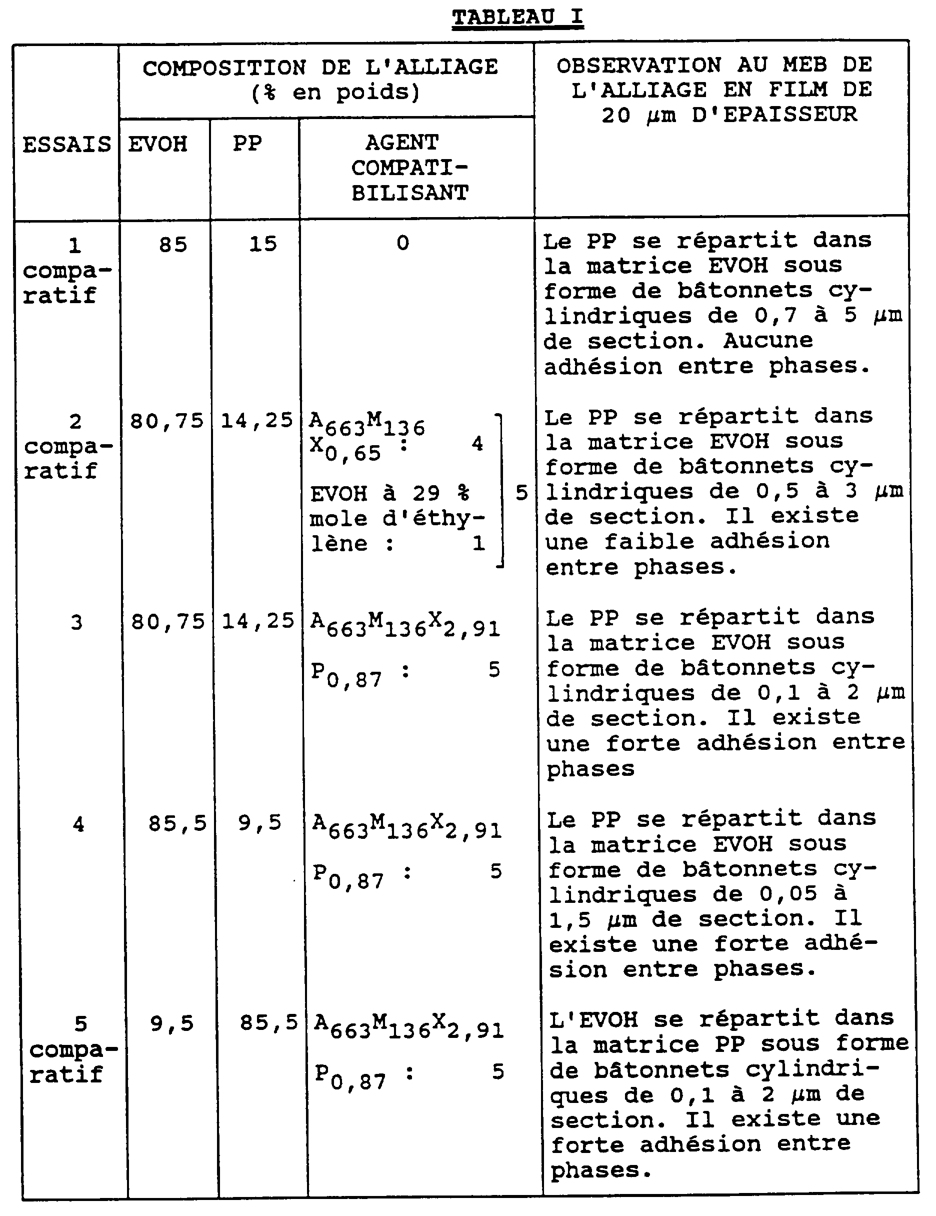

### c/ Résistance à l'eau chaude de films monocouches

### 1/ Composition des films

### - Exemple 1 (Comparatif)

Composition du film monocouche : 100 % de copolymère d'éthylène-alcool vinylique à 32 % d'éthylène (Melt Index : 3,2 g/10 minutes mesuré à 210°C sous 2,16 kg)

### - Exemple 2

Composition du film monocouche selon l'invention : 100 % de l'alliage ayant la composition en poids suivante :
. EVOH de l'exemple 1 : **80,75** %
. PP : copolymère statistique éthylène-propylène à 3 % en éthylène (MI : 10 - 230°C/2,16 kg) : **14,25** %
. agent compatibilisant A₆₆₃M₁₃₆X_{2,91}P_{0,87} : **5** %

### - Exemple 3 (Comparatif)

Composition du film monocouche : 100 % de copolymère d'éthylène-alcool vinylique à 44 % en mole d'éthylène (MI : 3,5 - 210/2,16 kg).

### - Exemple 4

Composition du film monocouche selon l'invention : 100 % de l'alliage ayant la composition en poids suivante :
. EVOH de l'exemple 3 : 80,75 %
. polypropylène de l'exemple 2 : 14,25 %
. agent compatibilisant de l'exemple 2 : 5 %

### - Exemple 5

Film ayant la composition du film de l'exemple 2, mais obtenu par extrusion-soufflage.

### 2/ Conditions des essais de tenue de l'eau chaude

Les films sont tendus dans un cadre de diapositive puis sont immergés 30 minutes dans un bain d'eau distillée thermostaté et légèrement agité par un barreau magnétique.

- Appréciation des résultats

A la fin de l'essai, l'aspect et la transparence des films sont évalués selon la classification arbitraire ci-après :

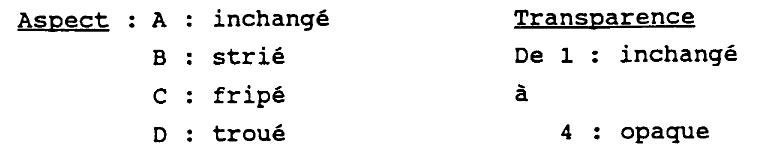

Ainsi un film d'aspect inchangé et opaque sera classé A4.

Les résultats sont consignés dans le Tableau II

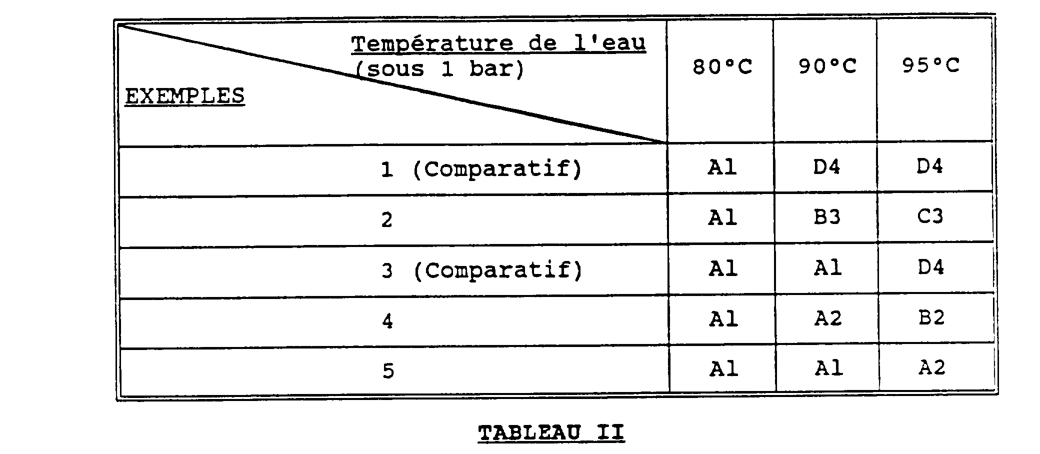

Les films monocouches selon l'invention - exemples 2, 4 et 5 présentent une meilleure tenue à l'eau chaude que les films monocouches à base d'EVOH - exemples 1 et 3. Les meilleurs résultats sont obtenus avec l'alliage à base d'EVOH contenant 32 % en mole d'éthylène (exemple 5).

### d/ Résistance à la vapeur d'eau surchauffée (stérilisation)

### 1/ Composition des films

### - Exemple 6 (comparatif)

Composition du film monocouche : idem exemple 1.

### - Exemple 7

Composition du film monocouche : idem exemple 2.

### 2/ - Conditions des essais de tenue à la vapeur d'eau surchauffée

Les essais réalisés à une température égale ou supérieure à 100°C ont été effectuées dans un autoclave.

Les films, tendus dans un cadre en inox (5 X 5 cm) sont disposés dans l'autoclave et soumis pendant 30 minutes aux conditions de l'essai qui peuvent se faire soit en vapeur saturante, soit dans l'eau surchauffée.

Dans le cas ou l'essai est réalisé avec de l'eau surchauffée l'eau est préchauffée dans un réservoir annexe à l'autoclave puis introduit rapidement dans l'autoclave au moyen d'un dispositif prévu à cet effet.

Les pressions dans le cas des essais réalisés avec de la vapeur d'eau surchauffée vont de 1 à 3 bars.

- Appréciations des résultats

On utilise la classification arbitraire mentionnée précédemment pour les essais de tenue à l'eau chaude.

Résultats

- Température de la vapeur d'eau surchauffée : 120°C
- **Exemple 6 (comparatif)** D4
- **Exemple 7** B1

### e/ Résistance à la vapeur d'eau surchauffée de,films trois couches

### 1/ Composition des films

On obtient par coextrusion soufflage des films trois couches dont la composition et les épaisseurs sont rassemblées dans le Tableau III.

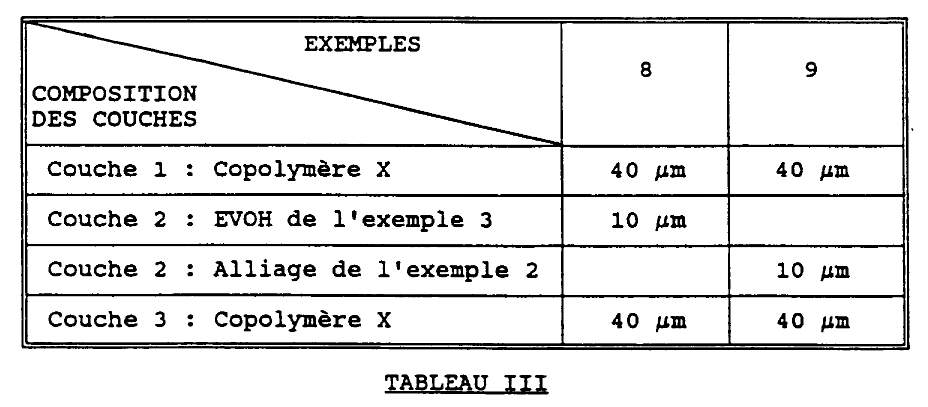

Dans ce Tableau, Copolymère X désigne un liant de coextrusion (copolymère propylène-éthylène greffé anhydride maléique).

Ces essais ont été effectués sur un matériel de coextrusion soufflage trois couches.

2/ Conditions de coextrusion
- extrudeuse 1 (copolymère X)
   température : 210°C - 230°C
   vitesse de vis : 132 tr/mn
- extrudeuse 2 (copolymère X)
   température : 210°C - 230°C
   vitesse de vis : 122 tr/mn
- extrudeuse 3 (alliage ou EVOH)
   température : 210°C - 230°C
- filière :
   . diamètre : 150 mm
   . taux de gonflage : 8,12
   . température : 220°C
- vitesse de tirage : 8,83 m/mm

Les résultats sont rassemblés dans le Tableau IV.

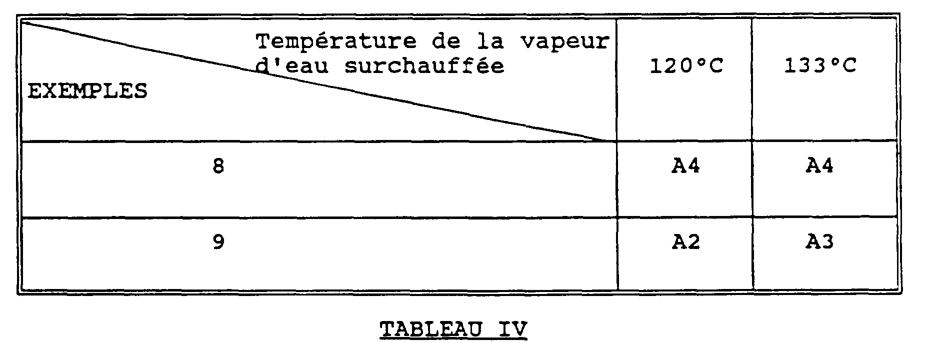

### f/ Résistance à la vapeur d'eau surchauffée de films cinq couches

### 1/ Composition des films

On obtient par coextrusion à plat des films cinq couches dont la composition et les épaisseurs sont rassemblées dans le tableau V.

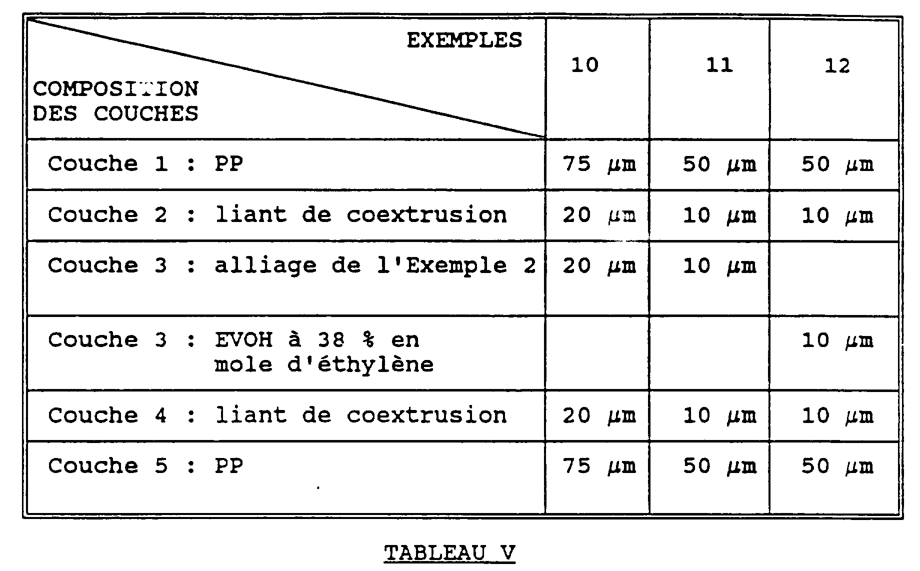

2/ - Conditions de coextrusion

Ces essais ont été effectués sur un matériel de coextrusion cinq couches.
- extrudeuse (PP)
   température : 200°C - 245°C
- extrudeuse (liant de coextrusion)
   température : 220°C - 245°C
- extrudeuse (EVOH ou alliage)
   température : 215°C - 245°C
- filière
   . entrefer : 0,7 mm. largeur 2 m
   . température : 250°C

Les résultats sont rassemblés dans le Tableau VI.

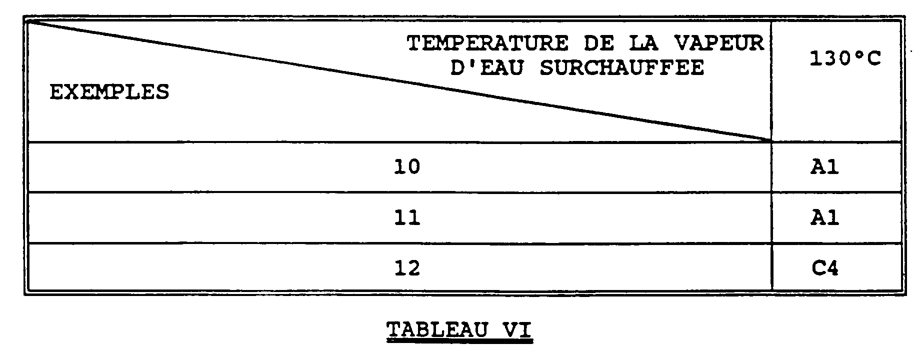

## Revendications

1. Film caractérisé en ce qu'il est constitué totalement ou partiellement d'un alliage comprenant au moins une matrice d'un copolymère éthylène-alcool vinylique, au moins un polypropylène et au moins un agent compatibilisant, le dit alliage comprenant au moins 30 % en poids d'EVOH.

2. Film selon la revendication 1, caractérisé en ce que l'alliage comprend :
- 42,5 % à 99,5 % en poids d'EVOH
- 0,2 % à 42,5 % en poids de polypropylène
- 0,1 % à 15 % en poids d'agent compatibilisant

3. Film selon la revendication 1 ou 2, caractérisé en ce que l'agent compatiblisant est choisi parmi les copolymères greffés de formule AMXP dans laquelle :
- AM représente un copolymère tronc obtenu par copolymérisation de propylène et d'α oléfines,
- X est choisi dans le groupe constitué par l'anhydride citraconique, l'acide fumarique, l'acide mésaconique, l'anhydride d'acide 3-allylsuccinique et l'anhydride maléique,
- P représente un oligomère de polyamide dérivé de caprolactame, d'acide amino-11 undécanoïque ou de dodécalactame.

4. Film selon l'une quelconque des revendications 1 à 2, caractérisé en ce que la proportion en moles d'éthylène dans l'EVOH est comprise dans l'intervalle 3 % à 75 % et de préférence de 10 % à 50 %.

5. Film multicouches comprenant au moins une couche constituée par un alliage tel que décrit dans la revendication 1.

6. Film multicouches selon la revendication 5 dans lequel l'autre ou les autres couches sont constituées de polymères choisis dans le groupe constitué par le polyéthylène, le polypropylène, le polyamide, le polyéthylènetéréphtalate, le polycarbonate.

7. Utilisation d'un film selon l'une quelconque des revendications 1 à 6 comme matériau d'emballage.

8. Utilisation d'un film selon la revendication 7 pour l'emballage des produits alimentaires.

9. Matériaux et articles emballés au moyen du film selon l'une quelconque des revendications 1 à 6.

## Patentansprüche

1. Folie,
dadurch gekennzeichnet, daß
sie vollständig oder teilweise aus einer Polymerlegierung besteht, die mindestens eine Matrix aus einem Ethylenvinylalkohol-copolymer (EVOH), mindestens ein Polypropylen und mindestens ein Kompatibilisierungsmittel enthält, wobei die Polymerlegierung mindestens 30 Gew.-% EVOH enthält.

2. Folie nach Anspruch 1, dadurch gekennzeichnet, daß die Polymerlegierung enthält:
- 42,5 bis 99,5 Gew.-% EVOH
- 0,2 bis 42,5 Gew.-% Polypropylen und
- 0,1 bis 15 Gew.-% Kompatibilisierungsmittel.

3. Folie nach Anspruch 1 oder 2, dadurch gekennzeichnet, daß das Kompatibilisierungsmittel unter den Pfropfcopolymeren der Formel AMXP ausgewählt ist, wobei
- AM ein durch Copolymerisation von Propylen und α-Olefinen erhaltenes Grundcopolymer ist,
- X unter Citraconsäureanhydrid, Fumarsäure, Mesaconsäure, 3-Allylbernsteinsäureanhydrid und Maleinsäureanhydrid ausgewählt ist und
- P ein von Caprolactam, 11-Aminoundecansäure oder Dodecanlactam abgeleitetes Polyamidoligomer ist.

4. Folie nach Anspruch 1 oder 2, dadurch gekennzeichnet, daß der molare Mengenanteil an Ethylen im EVOH im Bereich von 3 bis 75 % und vorzugsweise von 10 bis 50 % liegt.

5. Folie aus mehreren Schichten, die mindestens eine Schicht enthält, die aus einer Polymerlegierung nach Anspruch 1 besteht.

6. Folie aus mehreren Schichten nach Anspruch 5, wobei die andere Schicht oder die anderen Schichten aus Polymeren bestehen, die unter Polyethylen, Polypropylen, Polyamiden, Polyethylenterephthalat und Polycarbonaten ausgewählt sind.

7. Verwendung einer Folie nach einem der Ansprüche 1 bis 6 als Verpackungsmaterial.

8. Verwendung einer Folie nach Anspruch 7 zur Verpackung von Lebensmitteln.

9. Materialien und Gegenstände, die mit der Folie nach einem der Ansprüche 1 bis 6 verpackt sind.

## Claims

1. Film characterized in that it consists wholly or partially of an alloy comprising at least one ethylenevinyl alcohol copolymer matrix, at least one polypropylene and at least one compatibilizing agent, the said alloy comprising at least 30 % by weight of EVOH.

2. Film according to Claim 1, characterized in that the alloy comprises:
- 42.5 % to 99.5 % by weight of EVOH
- 0.2 % to 42.5 % by weight of polypropylene
- 0.1 % to 15 % by weight of compatibilizing agent.

3. Film according to Claim 1 or 2, characterized in that the compatibilizing agent is chosen from graft copolymers of formula AMXP in which:
- AM denotes a backbone copolymer obtained by copolymerizing propylene and α-olefins,
- X is chosen from the group consisting of citraconic anhydride, fumaric acid, mesaconic acid, the anhydride of 3-allylsuccinic acid and maleic anhydride,
- P denotes a polyamide oligomer derived from caprolactam, 11-aminoundecanoic acid or dodecalactam.

4. Film according to any one of Claims 1 to 2, characterized in that the molar proportion of ethylene in the EVOH is in the range 3 % to 75 % and preferably from 10 % to 50 %.

5. Multilayer film comprising at least one layer consisting of an alloy such as described in Claim 1.

6. Multilayer film according to Claim 5, in which the other layer or layers consist of polymers chosen from the group consisting of polyethylene, polypropylene, polyamide, polyethylene terephthalate and polycarbonate.

7. Use of a film according to any one of Claims 1 to 6 as packaging material.

8. Use of a film according to Claim 7 for packaging foodstuffs.

9. Materials and articles packaged by means of the film according to any one of Claims 1 to 6.
